(19) Europäisches Patentamt
European Patent Office
Office européen des brevets

(11) Veröffentlichungsnummer: **0 097 838**
**B1**

(12) # EUROPÄISCHE PATENTSCHRIFT

(45) Veröffentlichungstag der Patentschrift: **03.09.86**

(51) Int. Cl.⁴: **C 09 B 31/065,** C 09 B 43/28 // D06P3/06

(21) Anmeldenummer: **83105480.4**

(22) Anmeldetag: **03.06.83**

(54) **Disazofarbstoffe.**

(30) Priorität: **18.06.82 DE 3222909**

(43) Veröffentlichungstag der Anmeldung: **11.01.84 Patentblatt 84/2**

(45) Bekanntmachung des Hinweises auf die Patenterteilung: **03.09.86 Patentblatt 86/36**

(84) Benannte Vertragsstaaten: **CH DE FR GB LI**

(56) Entgegenhaltungen:
**FR-A-1 571 783**
**FR-A-2 030 035**
**FR-A-2 103 494**
**FR-A-2 187 859**
**US-A-3 267 069**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Hugl, Herbert, Dr., Gemarkenweg 9, D-5060 Bergisch- Gladbach 2 (DE)**
Erfinder: **Wolfrum, Gerhard, Dr., Domblick 17, D-5090 Leverkusen 3 (DE)**

**EP 0 097 838 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Gegenstand der Erfindung sind Farbstoffe, die in Form der freien Säure der Formel

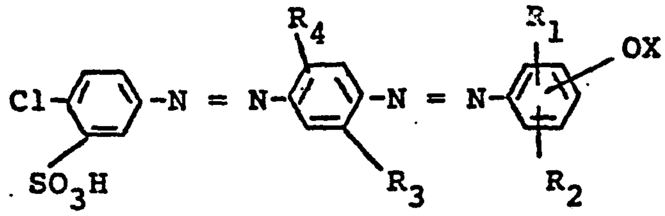

(I)

entsprechen, worin
$R_1$ für Wasserstoff, $CH_3$ oder Cl,
$R_2$ für Wasserstoff oder $CH_3$,
$R_3$ für Wasserstoff, $CH_3$ oder $C_1$-$C_2$-Alkoxy,
$R_4$ für Wasserstoff, $CH_3$ oder $OCH_3$ und
X für $C_1$-$C_2$-Alkyl
stehen
wobei sich der Substituent -OX in ortho- oder para-Stellung zur Azobrücke befindet.

Die neuen Farbstoffe erhält man in an sich bekannter Weise (vgl. z.B. DE-A-1 793 008, 1 931 691 und 2 329 129) durch Kuppeln von diazotierter 2-Chlor-5-amino-benzol-sulfonsäure auf ein Amin der Formel

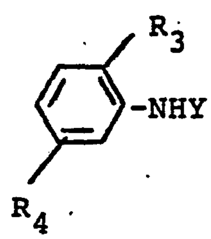

worin
Y für H oder - falls $R_3/R_3$ = H - für $-CH_2SO_3H$ steht,
gegebenenfalls Abspaltung des Restes Y = $-CH_2SO_3H$, Kuppeln des dabei erhaltenen diazotierten Aminoazofarbstoffs auf ein Phenol der Formel

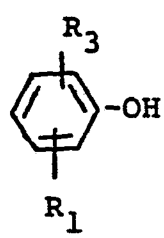

und Veretherung der phenolischen OH-Gruppe in dem entstandenen Disazofarbstoff.

Die dabei benötigten Ausgangsmaterialien sind durchweg bekannt bzw. nach bekannten Methoden erhältlich.

Die neuen Farbstoffe können in Form der freien Säure oder in Form ihrer Alkali- oder Ammoniumsalze vorliegen. Sie eignen sich auf Grund ihres guten Ziehvermögens aus saurer und auch neutraler Flotte hervorragend zum Färben von natürlichen oder - vorzugsweise - synthetischen Polyamidfasern.

Die erhaltenen Färbungen zeichnen sich durch ein gutes Echtheitsniveau, insbesondere gute Naßechtheiten, aus. Von nächstvergleichbaren bekannten Farbstoffen gemäß FR-A-2 030 035 mit einem ortho-ständigen Chloratom in der Diazokomponente unterscheiden sich die erfindungsgemäßen Farbstoffe beispielsweise durch eine geringere Wasserhärteempfindlichkeit.

**Beispiel 1**

30 g 5-Amino-2-chlorbenzolsulfonsäure werden zusammen mit 10 g Natriumnitrit in 200 ml Wasser bei pH 8-9 gelöst. Diese Lösung läßt man im Laufe von 30 Minuten bei 0-5°C zu einer Mischung aus 100 ml Wasser, 200 g Eis und 30 ml 37 Gew.%-iger Salzsäure zulaufen. Dann löst man die äquivalente Menge o-Anisidin bei 70°C in 300 ml Wasser und 20 ml 37 Gew.-%iger Salzsäure. Diese Lösung läßt man im Laufe von 20 Minuten zu der diazotierten 5-Amino-2-chlorbenzolsulfoneäure laufen, nachdem man zuvor den Nitritüberschuß mit Amidosulfonsäure entfernt hat. Nach ca. 1 Stunde stellt man durch Zugabe von Natriumacetatlösung den pH-Wert auf 4,5. Nach einer weiteren Stunde löst man durch Zugabe von 45 Gew.-%iger Natronlauge den erhaltener Monoazofarbstoff bei pH 9-10 vollständig und gibt 10 g Natriumnitrit, gelöst in 30 ml Wasser, zu. Die so erhaltene Lösung läßt man bei 15°C im Laufe von 30 Minuten in eine Vorlage aus 200 ml Wasser, 50 g Eis und 30 ml 37 Gew.-%ige Salzsäure einlaufen. Man rührt 1 Stunde lang bei 15°C nach und zerstört dann den Nitritüberschuß mit Amidosulfonsäure. Das so erhaltene Diazoniumsalz läßt man im Laufe von 30 Minuten bei pH 10-10,5 und 0-5°C in eine Lösung aus 13,7 g Phenol, 300 ml Wasser und 200 g Eis einlaufen. Den pH-Wert hält man durch gleichzeitiges Zutropfen von Natronlauge konstant. Man rührt über Nacht nach, salzt dann den Diazofarbstoff der Formel

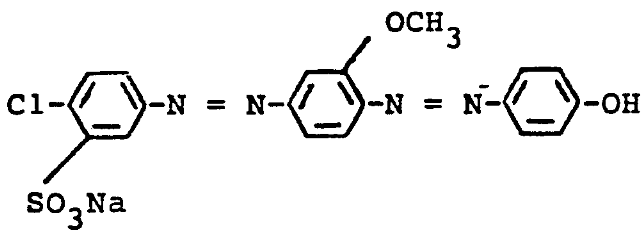

durch Zugabe von 300 g Kochsalz aus und saugt den erhaltenen Niederschlag ab. Die erhaltene Feuchtpaste löst man bei 80°C in einer Mischung aus 800 ml Wasser, 800 ml Isopropanol und 200 ml Dimethylformamid unter Zugabe von Natronlauge bis pH 11. Zu dieser Lösung läßt man im Laufe von 4 Stunden 150 g Dimethylsulfat zutropfen, wobei man den pH-Wert durch Zugabe von Natronlauge ständig bei 11 und die Temperütur bei 80°C hält. Danach destilliert man mit Wasserdampf ca. 1 l Lösungsmittelgemisch ab, versetzt danach mit 1 l 6 %iger Kochsalzlösung und läßt unter Rühren erkalten. Bei Raumtemperatur saugt man den erhaltenen Farbstoff der Formel

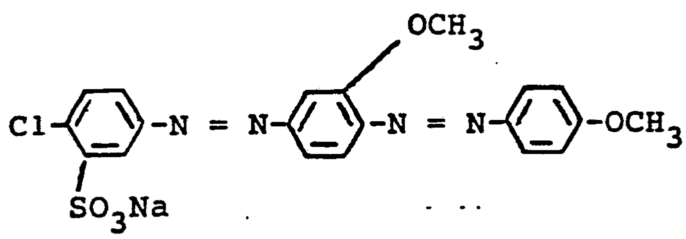

ab. Der erhaltene Farbstoff färbt Polyamidfasern gelbstichig-orange mit guten Licht- und Naßechtheiten.

Ähnlich wertvolle Farbstoffe erhält man, wenn man in analoger Weise die in der nachstehenden Tabelle aufgeführten Farbstoffe herstellt.

| | Farbstoff der Formel | Farbton auf Polyamid |
|---|---|---|
| 2. | 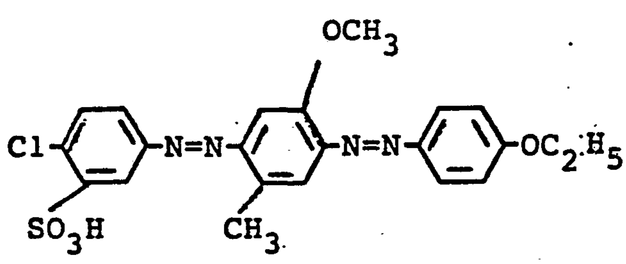 | gelbstichig Orange |

3. 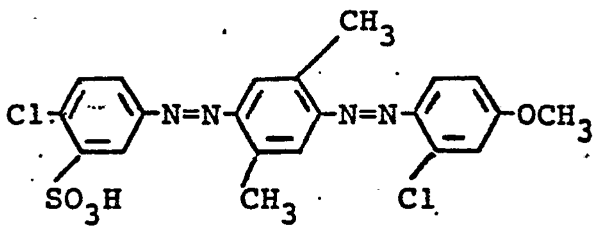 rotstichig Gelb

4. 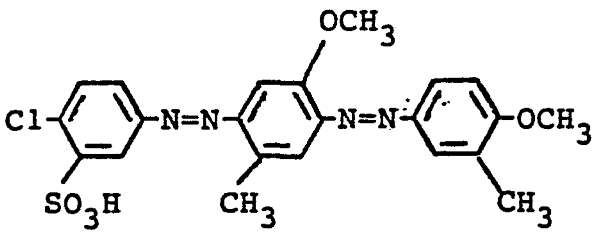 gelbstichig Orange

**Färbebeispiel**

0,1 g des Farbstoffs aus Beispiel 1 wird in 100 ml Wasser heiß gelöst, 5 ml 10 %ige Ammoniumacetatlösung zugesetzt und auf ein Volumen von 500 ml mit Wasser verdünnt. Man geht mit 10 g Polyamidfaser in das Färbebad ein, bringt das Färbebad innerhalb von 20 Minuten zum Kochen, setzt 4 ml 10 %ige Essigsäure zu und hält eine Stunde auf Kochtemperatur. Danach wird gespült und bei 70 - 80°C getrocknet. Man erhält eine Färbung in rotstichiggelbem Ton von sehr guter Licht- und Naßechtheit.

**Patentansprüche**

1. Disazofarbstoffe, die in Form der freien Säure der Formel

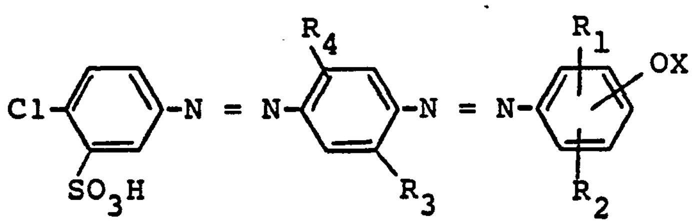 (I)

entsprechen,
$R_1$ für Wasserstoff, $CH_3$ oder Cl,
$R_2$ für Wasserstoff oder $CH_3$,
$R_3$ für Wasserstoff, $CH_3$ oder $C_1$-$C_2$-Alkoxy,
$R_4$ für Wasserstoff, $CH_3$ oder $OCH_3$ und
X für $C_1$-$C_2$-Alkyl
stehen
wobei sich der Substituent -OX in ortho- oder para-Stellung zur Azobrücke befindet.
2. Disazofarbstoff gemäß Anspruch 1 der Formel

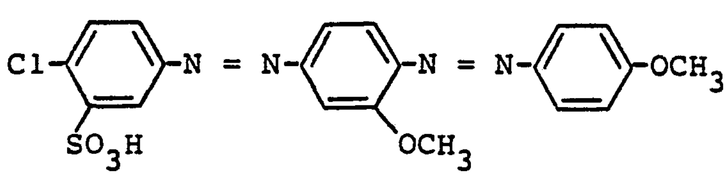

3. Verfahren zum Färben von Polyamidfasern, dadurch gekennzeichnet, daß man Farbstoffe gemäß Anspruch 1 oder 2 verwendet.

**Claims**

Disazo dyestuffs which in the form of the free acid correspond to the formula

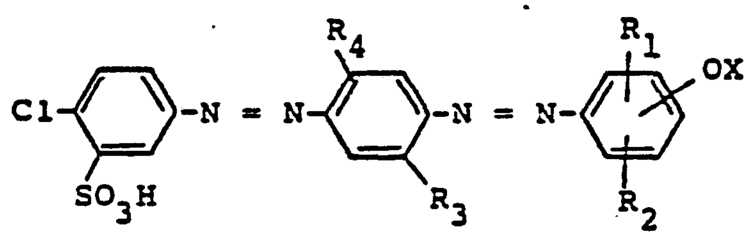

(I)

$R_1$ represents hydrogen, $CH_3$, or Cl,
$R_2$ represents hydrogen or $CH_3$,
$R_3$ represents hydrogen, $CH_3$ or $C_1$-$C_2$-alkoxy,
$R_C$ represents hydrogen, $CH_3$ or $OCH_3$ and
X represents $C_1$-$C_2$-alkyl, the substituent -OX being in the ortho or para position relative to the azo bridge.
2. Disazo dyestuff according to Claim 1 of the formula

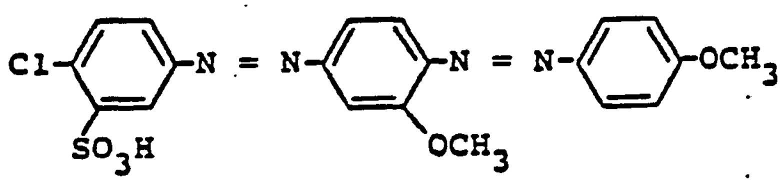

3. Process for dyeing polyamide fibres, characterised in that dyestuffs according to Claim 1 or 2 are used.

**Revendications**

1. Colorants bisazoïques qui répondent sous la forme de l'acide libre à la formule

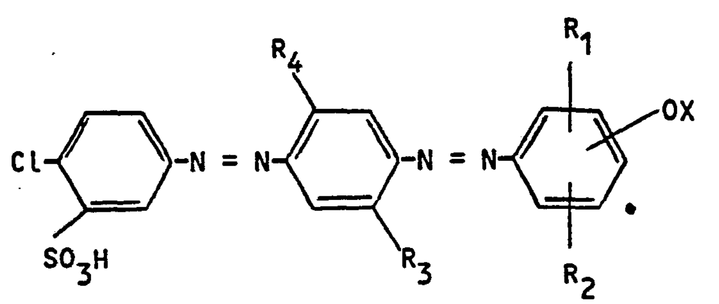

(I)

dans laquelle
$R_1$ représente l'hydrogène, $CH_3$ ou Cl,
$R_2$ représente l'hydrogène ou $CH_3$,
$R_3$ représente l'hydrogène, $CH_3$ ou alcoxy en $C_1$-$C_2$,
$R_4$ représente l'hydrogène, $CH_3$ ou $OCH_3$ et
X représente alkyle en $C_1$-$C_2$ le substituant -OX étant en position ortho ou para, par rapport au pont azo.
2. Colorant bisazoique selon la revendication 1, de formule

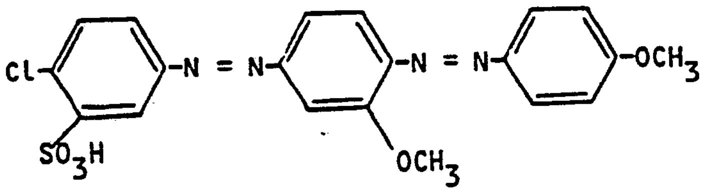

3. Procédé pour la teinture de fibres de polyamides, caractérisé en ce que l'on utilise des colorants selon la revendication 1 ou 2.